# EUROPÄISCHE PATENTSCHRIFT

(11) **EP 2 295 319 B1**
(45) Veröffentlichungstag und Bekanntmachung des Hinweises auf die Patenterteilung: **07.09.2011**
(21) Anmeldenummer: 09169810.0
(22) Anmeldetag: 09.09.2009
(51) Int. Cl.: B65B 17/02, B65G 17/32

(54) **Vorrichtung zum Transport flacher Gegenstände**
Device for transporting flat objects
Dispositif de transport d'objets plats

(43) Veröffentlichungstag der Anmeldung: 16.03.2011
(73) Patentinhaber: UHLMANN PAC-SYSTEME GmbH & Co. KG, 88471 Laupheim (DE)
(72) Erfinder: Rodi, Wolfgang, 88471, Laupheim / Baustetten (DE)
(74) Vertreter: Kroher, Jürgen

(56) Entgegenhaltungen:
- US-A- 3 407 563

## Beschreibung

Die Erfindung betrifft eine Vorrichtung zum Transport flacher Gegenstände gemäß dem Oberbegriff des Anspruchs 1.

Derartige Vorrichtungen zum Transport flacher Gegenstände werden beispielsweise in der Pharmaindustrie zum Transport von Blisterstreifen verwendet. Dabei werden die Blisterstreifen durch die Vorrichtung aus einer Abgabeeinheit, beispielsweise einer Stanze, aufgenommen und zu einer Aufnahmeeinheit, beispielsweise einem Blisterschacht, transportiert.

Eine derartige Vorrichtung zum Transport von Blisterstreifen ist beispielsweise als umlaufendes Saugband ausgestaltet, bei dem die Blisterstreifen mit den Blisternäpfen nach unten hängend transportiert werden können.

Eine andere Vorrichtung zum Transport von Blisterstreifen, bei denen die Blisterstreifen ebenfalls hängend, aber mit den Blisternäpfen nach oben transportiert werden, ist aus DE 10 2005 046 603 A1 bekannt. Bei dieser Transportvorrichtung sind die Blisternäpfe in entsprechend angepasste Aufnahmen des Transportbandes formschlüssig eingepasst und werden dort mittels Ansaugung festgehalten.

Allen Transportbändern, an denen die Blisterstreifen über Vakuum gehalten werden, ist gemein, dass sie mit relativ hohen Betriebskosten verbunden sind. Außerdem sind der mit der Vakuumerzeugung verbundene Abluftstrom und die erzeugte Wärme von großem Nachteil für ein Reinraumsystem, wie es bei pharmazeutischen Produkten oft notwendig ist. Schließlich ist bei leicht gekrümmten Blisterstreifen ein sicheres Ansaugen der Blisterstreifen an das Transportband nicht immer gewährleistet.

Es existiert auch eine Vielzahl mechanischer Transportvorrichtungen zum hängenden Transport von flachen Gegenständen, die aber jeweils ziemlich aufwändig und wartungsintensiv sind.

Das Dokument US 3 407 563 offenbart eine Vorrichtung zum Transport flacher Gegenstände gemäß dem Obergegriff des Anspruchs 1. US 3 407 563 offenbart eine Vorrichtung mit einem Förderband, an dem Dosen hängend transportiert werden. Dabei werden jeweils sechs Dosen an ihrer Oberkante mittels eines flachen Trägers verbunden. Die Träger werden im Bereich des Förderbandes mittels zweier erster Schenkel an einer Trägerplatte des Förderbandes festgeklemmt, durch das Förderband weitertransportiert und anschließend durch das Wegschwenken der ersten Schenkel wieder freigegeben. Nach Freigabe der Trägerplatte durch die ersten Schenkel schlagen zwei zweite Schenkel die Träger nach unten ab.

Der vorliegenden Erfindung liegt daher die Aufgabe zugrunde, eine Vorrichtung zum Transport von flachen Gegenständen zu schaffen, die einfach aufgebaut ist, einen sicheren Transport auch leicht gekrümmter Gegenstände gewährleistet und eine hohe Funktionssicherheit aufweist.

Diese Aufgabe wird durch die Merkmale des Anspruchs 1 gelöst.

Erfindungsgemäß weist die Vorrichtung zum Transport flacher Gegenstände von einer Abgabeeinheit an eine Aufnahmeeinheit ein Transportband auf, an dem die flachen Gegenstände hängend transportierbar sind. Das Transportband weist dabei mehrere Paare von Klappen auf, wobei jede Klappe einen ersten Schenkel und einen zweiten Schenkel aufweist, welche einen Zwischenraum zur Aufnahme eines Randabschnitts eines der flachen Gegenstände definieren, und wobei die ersten und zweiten Schenkel der Klappen eines jeden Paares von Klappen einander zugewandt sind. Außerdem sind die Klappen zwischen einer Öffnungsstellung zur Aufnahme und Abgabe der flachen Gegenstände und einer Schließstellung zum Transport der flachen Gegenstände schwenkbar. Dabei werden die flachen Gegenstände durch eine Zuführeinheit von unten in die Klappen befördert.

Auf diese Weise wird eine Vorrichtung zum Transport flacher Gegenstände geschaffen, die einfach aufgebaut ist, eine vollkommen exakte Aufnahme und Abgabe der Gegenstände sicherstellt und gewisse Nachteile der Vakuumtechnik vermeidet. Durch das gegensinnige Schwenken der Klappen eines Paares werden die in den Zwischenraum zwischen den beiden Schenkeln einer jeden Klappe eingelegten Randabschnitte des flachen Gegenstandes sicher festgehalten und auf einfache Weise wieder abgegeben. Mit dieser Ausgestaltung können sogar flache Gegenstände unterschiedlicher Größe (innerhalb eines bestimmten Größenbereichs) ohne Formatanpassung transportiert werden.

Im Sinne einer besonders einfachen mechanischen Ausgestaltung schließen der erste Schenkel und der zweite Schenkel einer Klappe einen spitzen Winkel ein.

Eine minimale Schwenkbewegung der Klappen bei optimaler Funktionstauglichkeit ist gewährleistet, wenn der erste Schenkel und der zweite Schenkel einer Klappe einen Winkel von zwischen 45° und 70°, vorzugsweise zwischen 55° und 60°, einschließen.

Es ist bevorzugt, dass der zweite Schenkel, welcher weiter nach unten ragt, kürzer ist als der erste Schenkel. Dadurch wird das Abschlagen der flachen Gegenstände im Abgabebereich der Vorrichtung begünstigt.

In einer besonders bevorzugten Ausführungsform ist der erste Schenkel in der Schließstellung horizontal ausgerichtet und nimmt in der nach unten geschwenkten Öffnungsstellung einen Winkel von zwischen 20° und 45°, vorzugsweise zwischen 30° und 35°, zur Horizontalen ein. Dadurch wird neben dem sicheren Transport der flachen Gegenstände ein definiertes Abschlagen der Gegenstände vom Transportband mittels der ersten Schenkel der Klappen gewährleistet.

Um die Synchronizität des Aufnahme- und Abgabevorgangs der flachen Gegenstände zu gewährleisten, sind die Klappen vorzugsweise kurvengesteuert schwenkbar.

Hierzu weist die Vorrichtung vorzugsweise eine erste Kurvenbahn auf, welche zwei höhenverstellbare Abschnitte zur Schwenkung der Klappen aufweist.

Die Höhenverstellung eines ersten Abschnittes der ersten Kurvenbahn in einem Aufnahmebereich der Vorrichtung erfolgt dabei vorzugsweise über eine erste Kurvenscheibe, welche an einer extern angetriebenen ersten Welle befestigt ist. Auf diese Weise ist es möglich, die Welle beispielsweise über den Antrieb der Abgabeeinheit antreiben zu lassen, um einen synchronen Betrieb der Abgabeeinheit und der Vorrichtung zum Transport flacher Gegenstände sicherzustellen.

Aufgrund der schlagartig vorzunehmenden Öffnung der Klappen in einem Abgabebereich der Vorrichtung ist es vorteilhaft, dass die Höhenverstellung eines zweiten Abschnittes der ersten Kurvenbahn im Abgabebereich der Vorrichtung über einen Pneumatikzylinder erfolgt.

Die Schwenkung der Klappen wird auf mechanisch einfache und schonende Weise dadurch erreicht, dass jede Klappe eine erste Rolle aufweist, welche seitlich versetzt zu einer Drehachse der Klappe angeordnet ist und mit einer ersten Kurvenbahn der Vorrichtung zusammenwirkt.

Zur jeweiligen Rückstellung der Klappe ist es außerdem bevorzugt, dass jede Klappe eine zweite Rolle aufweist, welche ebenfalls seitlich versetzt zur Drehachse der Klappe angeordnet ist, allerdings auf einer der ersten Rolle gegenüberliegenden Seite, und mit einer zweiten Kurvenbahn der Vorrichtung zusammenwirkt.

Die Zuführeinheit, welche die flachen Gegenstände von unten in die Klappen fördert, ist beispielsweise als Ansaugvorrichtung ausgestaltet, welche ebenfalls kurvengesteuert ist.

Die Höhenverstellung der Ansaugvorrichtung erfolgt dabei vorzugsweise über eine zweite Kurvenscheibe, welche an einer extern angetriebenen zweiten Welle befestigt ist. Idealerweise werden die erste Welle und die zweite Welle über denselben externen Antrieb bewegt, wodurch ein synchroner Ablauf des Aufnahmevorgangs flacher Gegenstände bewirkt wird.

Weitere Merkmale und Vorteile der vorliegenden Erfindung ergeben sich aus der nachfolgenden Beschreibung unter Bezugnahme auf die Zeichnungen.
- Fig. 1: ist eine Perspektivansicht einer Ausführungsform der erfindungsgemäßen Vor- richtung zum Transport flacher Gegenstände;
- Fig. 2: ist eine Querschnittsansicht der Vorrichtung zum Transport flacher Gegenstände aus Fig. 1;
- Fig. 3: ist eine vergrößerte Querschnittsansicht der Zuführeinheit sowie eines Paares von in Öffnungsstellung befindlichen Klappen in einem Aufnahmebereich der Vorrichtung mit der zugehörigen Mechanik;
- Fig. 4: ist eine Perspektivansicht der Elemente aus Fig. 3, wobei die Zuführeinheit den flachen Gegenstand bereits zu einem gewissen Maß angehoben hat;
- Fig. 5: ist eine Querschnittsansicht vergleichbar Fig. 3, wobei die Zuführeinheit den fla- chen Gegenstand vollständig angehoben hat und die Klappen sich in einer Schließstellung befinden;
- Fig. 6: ist eine vergrößerte Perspektivansicht eines Paares von Klappen in der Öff- nungsstellung;
- Fig. 7: ist eine Querschnittsansicht des Paares von Klappen aus Fig. 6;
- Fig. 8: ist eine Perspektivansicht eines Paares von Klappen im Abgabebereich der Vor- richtung mit der zugehörigen Mechanik, wobei die Klappen in der Öffnungsstel- lung zur Abgabe des flachen Gegenstandes dargestellt sind; und
- Fig. 9: ist eine Querschnittsansicht der Elemente aus Fig. 8.

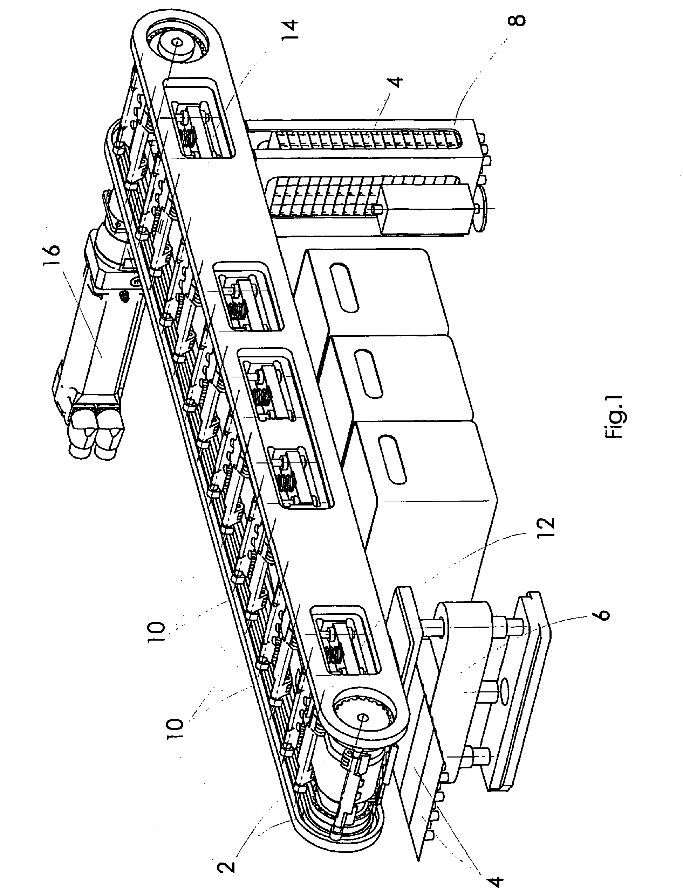

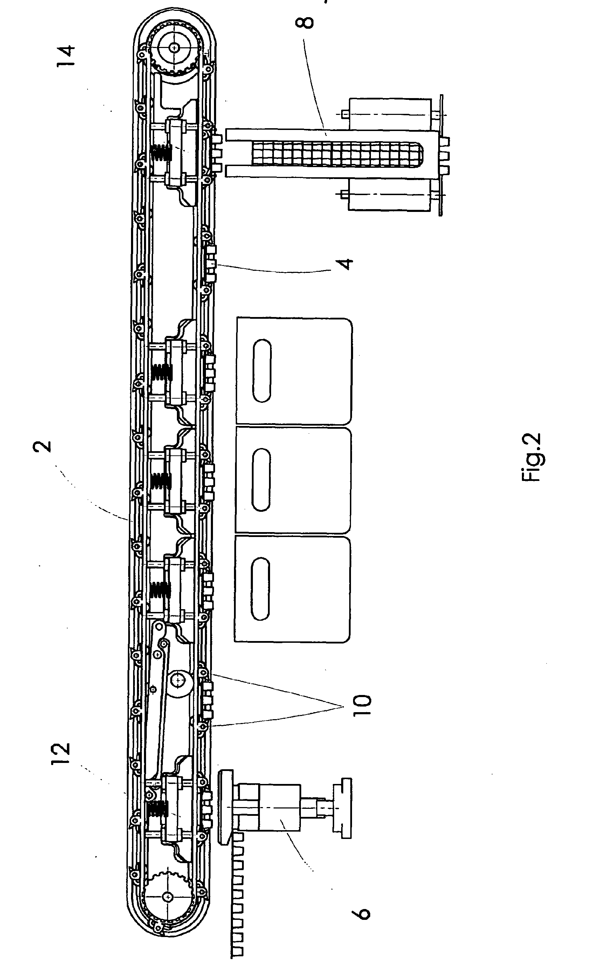

In Fig. 1 und 2 ist eine Ausführungsform der erfindungsgemäßen Vorrichtung zum Transport flacher Gegenstände dargestellt. Als flacher Gegenstand soll dabei jeder Gegenstand bezeichnet sein, der zumindest flache Randabschnitte aufweist.

Die Vorrichtung weist ein umlaufendes Transportband 2 auf, an dem flache Gegenstände 4, im vorliegenden Fall Blisterstreifen, von einer Abgabeeinheit 6 (hier einer Stanze zum Ausstanzen von Blisterstreifen aus einer Blisterbahn) zu einer Aufnahmeeinheit 8 (im vorliegenden Fall einem Blisterschacht) transportiert werden. Das Transportband 2 umfasst eine Vielzahl von Paaren von Klappen 10. Jedes Paar von Klappen 10 nimmt einen flachen Gegenstand 4 in einem Aufnahmebereich 12 der Vorrichtung auf und transportiert den flachen Gegenstand 4 hängend zu einem Abgabebereich 14 der Vorrichtung, in dem der flache Gegenstand 4 von den Klappen 10 wieder freigegeben wird. Das Transportband 2 ist zu diesem Zweck mittels einer Antriebseinheit 16 getaktet umlaufend angetrieben, wobei der Transport der flachen Gegenstände 4 lediglich am unteren Abschnitt des umlaufenden Transportbandes 2 stattfindet. Im dargestellten Beispielsfall dreht sich das Transportband 2 gegen den Uhrzeigersinn.

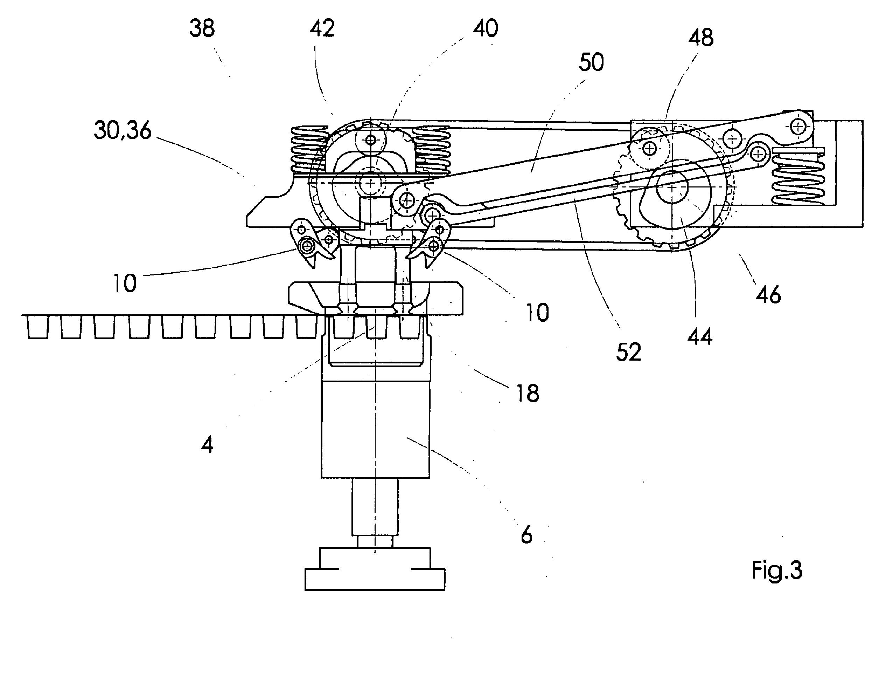

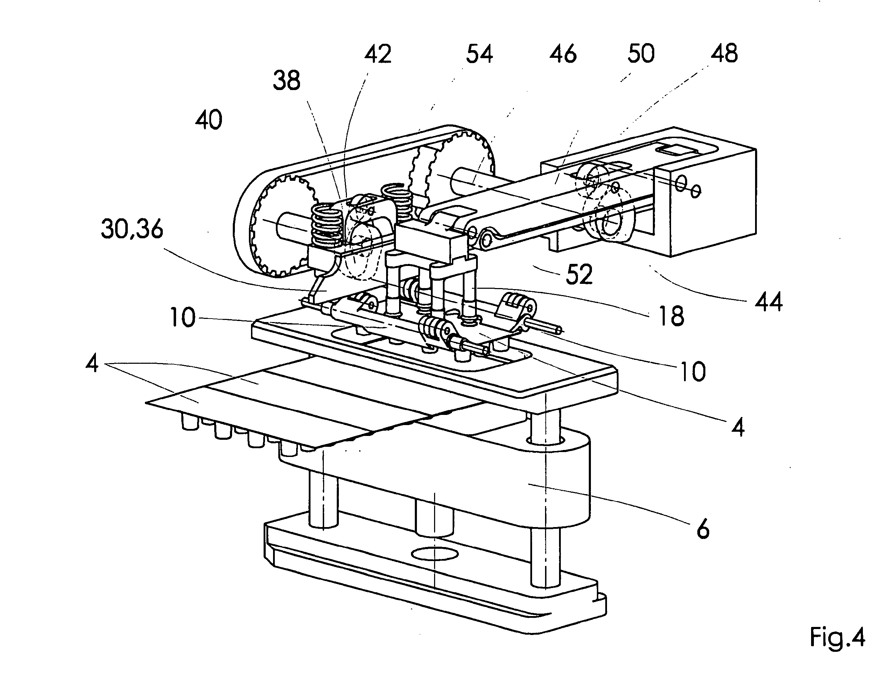

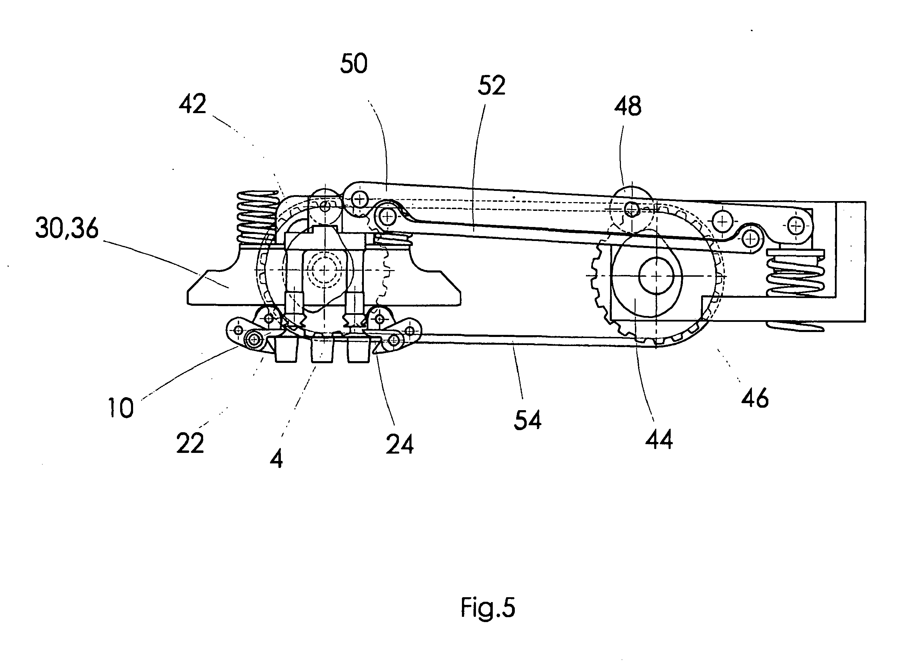

In Fig. 3 bis Fig. 5 ist der Ablauf zur Aufnahme eines flachen Gegenstandes 4 aus der Abgabeeinheit 6 in ein Paar von Klappen 10 in drei aufeinander folgenden Schritten dargestellt. In Fig. 3 befindet sich eine Zuführeinheit 18, die im vorliegenden Beispielsfall als Ansaugvorrichtung ausgebildet ist, in einer abgesenkten Stellung, in der sie den in der Abgabeeinheit 6 bereit gestellten flachen Gegenstand 4 aufnehmen kann. Die Zuführeinheit 18 wird dann nach oben bewegt, bis sie über die Stellung aus Fig. 4 in die Position gemäß Fig. 5 gelangt. Gleichzeitig befindet sich das Paar von Klappen 10 in Fig. 3 und 4 in einer Öffnungsstellung, während die Klappen in Fig. 5 eine Schließstellung eingenommen haben.

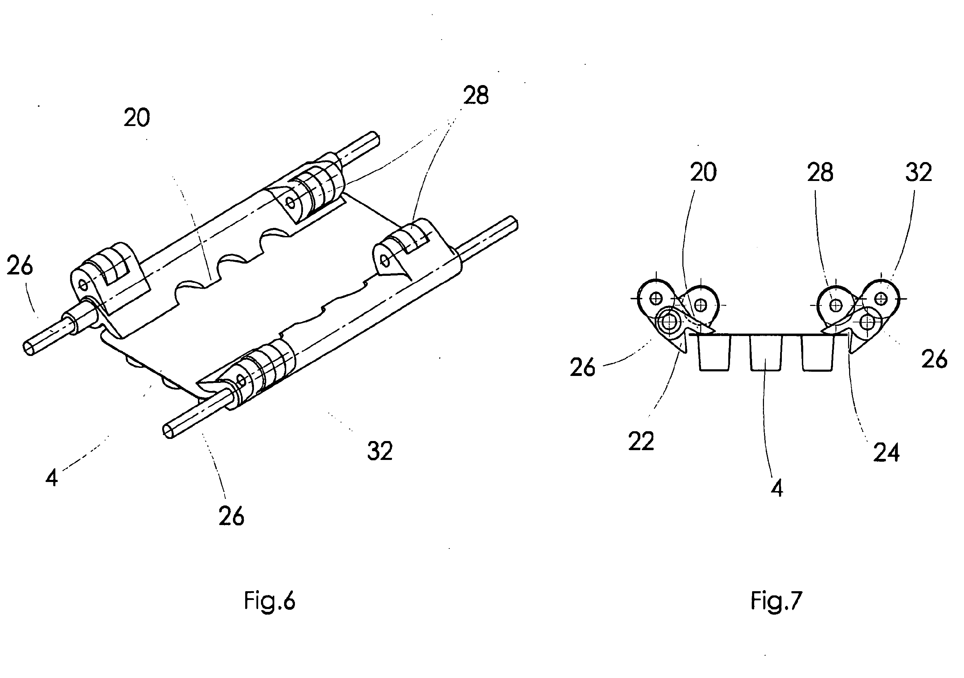

In Fig. 6 und 7 ist ein Paar von Klappen 10 in der Öffnungsstellung gezeigt. Jede Klappe 10 weist einen ersten Schenkel 20 und einen zweiten Schenkel 22 auf. Der erste Schenkel 20 und der zweite Schenkel 22 einen jeden Paares von Klappen 10 definieren einen Zwischenraum 24 zur Aufnahme eines Randabschnitts des flachen Gegenstandes 4. Die ersten Schenkel 20 der Klappen 10 eines jeden Paares von Klappen 10 sind dabei einander zugewandt. In der in Fig. 5 dargestellten Schließstellung der Klappen 10 sind auch die beiden zweiten Schenkel 22 der Klappen 10 des Paares von Klappen 10 einander zugewandt.

Die Klappen 10 sind zwischen der Öffnungsstellung zur Aufnahme und Abgabe der flachen Gegenstände 4 und der Schließstellung zum Transport der flachen Gegenstände 4 um eine Drehachse 26 schwenkbar. Der erste Schenkel 20 und der zweite Schenkel 22 einer Klappe 10 schließen einen spitzen Winkel ein, der vorzugsweise zwischen 45° und 70° und mehr bevorzugt zwischen 55° und 60° liegt. In der dargestellten bevorzugten Ausführungsform ist der zweite Schenkel 22 auch kürzer als der erste Schenkel 20. In der in Fig. 5 dargestellten Schließstellung ist der erste Schenkel 20 horizontal ausgerichtet, während er in der nach unten geschwenkten Öffnungsstellung (Fig. 7) einen Winkel von zwischen 20° und 45°, vorzugsweise zwischen 30° und 35° zur Horizontalen einnimmt. In der in Fig. 5 dargestellten Schließstellung sind die Randabschnitte des flachen Gegenstandes 4 sicher im Zwischenraum 24 zwischen dem ersten Schenkel 20 und dem zweiten Schenkel 22 der beiden Klappen 10 eines Paares von Klappen 10 aufgenommen, wobei die beiden schräg angeordneten zweiten Schenkel 22 ein Herunterrutschen oder Herunterfallen des flachen Gegenstandes 4 verhindern. In der in Fig. 6 und 7 dargestellten Öffnungsstellung hingegen ist der zweite Schenkel 22 in eine im wesentlichen vertikale Position geschwenkt, so dass der flache Gegenstand 4 ohne weiteres von unten aufgenommen bzw. nach unten abgegeben werden kann.

Zur Schwenkung der Klappen 10 ist es bevorzugt, dass jede Klappe 10 eine erste Rolle 28 aufweist, welche seitlich nach innen versetzt zur Drehachse 26 der Klappe 10 angeordnet ist und von einer ersten Kurvenbahn 30 (siehe Fig. 4) beaufschlagt wird. Durch Drücken von oben auf die erste Rolle 28 wird die Klappe 10 in die Öffnungsstellung bewegt bzw. in dieser gehalten.

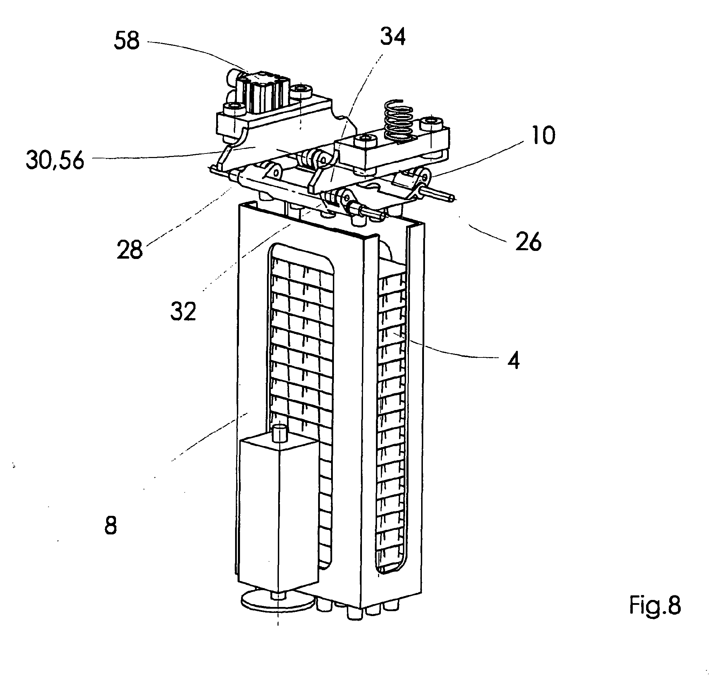

Jede Klappe 10 weist außerdem eine zweite Rolle 32 auf, welche seitlich nach außen versetzt zur Drehachse 26 der Klappe 10 angeordnet ist, also auf einer der ersten Rolle 28 gegenüberliegenden Seite. Die zweite Rolle 32 wirkt mit einer zweiten Kurvenbahn 34 (Fig. 8) der Vorrichtung zusammen und bewirkt eine Schwenkung der Klappe 10 in Richtung der Schließstellung bzw. hält die Klappe 10 in der Schließstellung.

Die oben angegebenen bevorzugten Winkelverhältnisse gewährleisten, dass bereits geringe Drehbewegungen der Klappen 10 ausreichen, um den flachen Gegenstand 4 sicher in der Schließstellung zu halten bzw. eine präzise Aufnahme und Abgabe des flachen Gegenstandes 4 zu gewährleisten. Auch die kürzere Ausgestaltung des zweiten Schenkels 22 unterstützt bei diesem Ziel.

Wieder Bezug nehmend auf Fig. 3 und 4 ist ersichtlich, dass ein höhenverstellbarer erster Abschnitt 36 der ersten Kurvenbahn 30 auf die ersten Rollen 28 der Klappen 10 drückt und somit eine Drehung der Klappen 10 in ihre Öffnungsstellung bewirkt.

Die Höhenverstellung des ersten Abschnittes 36 der ersten Kurvenbahn 30 erfolgt über eine erste Kurvenscheibe 38, die an einer extern angetriebenen ersten Welle 40 befestigt ist. In der dargestellten Ausführungsform ist auf der ersten Kurvenscheibe 38 ein beweglicher Anker 42 aufgelegt, welcher mit dem ersten Abschnitt 36 der ersten Kurvenbahn 30 verbunden ist und dessen Höhenverstellung somit unmittelbar auf den ersten Abschnitt 36 der ersten Kurvenbahn 30 übertragen wird.

In der in Fig. 5 dargestellten Schließstellung der Klappen 10 ist der flache Gegenstand 4 sicher im Zwischenraum 24 zwischen dem ersten Schenkel 20 und dem zweiten Schenkel 22 aufgenommen. Hierzu befindet sich der erste Abschnitt 36 der ersten Kurvenbahn 30 in einer erhöhten Stellung und drückt nicht auf die ersten Rollen 28 der Klappen 10.

Synchron zur Höhenverstellung des ersten Abschnitts 36 der ersten Kurvenbahn 30 und der damit verbundenen Schwenkbewegung der Klappen 10 muss auch die Zuführeinheit 18 in vertikaler Richtung bewegt werden. Hierzu dient eine zweite Kurvenscheibe 44, welche an einer extern angetriebenen zweiten Welle 46 befestigt ist. Die zweite Kurvenscheibe 44 wirkt dabei mit einer Rolle 48 zusammen, welche in einem schwenkbar gelagerten Hebel 50 gelagert ist, an dessen vorderem Ende wiederum die Zuführeinheit 18 schwenkbar gelagert ist.

Zur Einhaltung der vertikalen Ausrichtung der Zuführeinheit 18 bei der Schwenkbewegung des Hebels 50 dient eine Parallelführung 52. Vorzugsweise sind die erste Welle 40 und die zweite Welle 46 über denselben externen Antrieb angesteuert, der idealerweise der Antrieb der als Stanze ausgebildeten Abgabeeinheit 6 ist. Hierzu können die erste Welle 40 und die zweite Welle 46 über einen Zahnriemen 54 verbunden sein und mit der Antrieb der Stanze verbunden sein.

Die Drehbewegung der Klappen 10 in die in Fig. 5 dargestellte Schließstellung erfolgt üblicherweise durch Ausüben eines Druckes auf die zweiten Rollen 32 der Klappen 10 mittels einer zweiten Kurvenbahn 34, die in Fig. 3 bis 5 aus Übersichtlichkeitsgründen nicht dargestellt ist, aber ähnlich der Kurvenbahn 34 aus Fig. 8 ausgebildet ist. Ebenso ist es möglich, eine Drehfeder vorzusehen, um eine Rückführung der Klappen 10 in die Schließstellung sicherzustellen, sobald der erste Abschnitt 36 der ersten Kurvenbahn 30 nicht mehr auf die ersten Rollen 28 der Klappen 10 drückt.

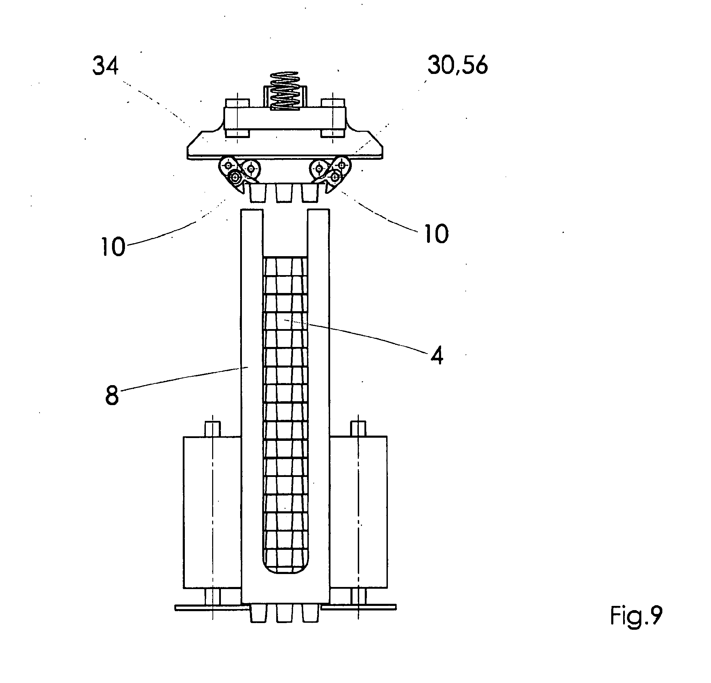

In dem in Fig. 8 und 9 dargestellten Abgabebereich 14 der Vorrichtung werden die flachen Gegenstände 4 in eine Aufnahmeeinheit 8, hier einen Blisterschacht, abgegeben. Hierzu wird ein zweiter Abschnitt 56 der ersten Kurvenbahn 30 mittels eines Pneumatikzylinders 58 schlagartig nach unten bewegt, drückt auf die ersten Rollen 28 der Klappen 10, schwenkt diese dadurch in die Öffnungsstellung und gibt somit den flachen Gegenstand 4 nach unten frei. Aufgrund der speziellen Ausgestaltung der ersten Schenkel 20 der Klappen 10 schlagen diese den flachen Gegenstand 4 zusätzlich gleichmäßig nach unten ab, was besonders vorteilhaft auch bei krummen Blisterstreifen ist. Nach erneutem Anheben des zweiten Abschnitts 56 der ersten Kurvenbahn 30 wirkt die zweite Kurvenbahn 34 auf die zweiten Rollen 32 der Klappen 10 und schwenkt diese wieder in die Schließstellung zurück.

Es sind auch verschiedene Modifikationen der erfindungsgemäßen Vorrichtung zum Transport flacher Gegenstände 4 für den Fachmann denkbar. Beispielsweise kann die Zuführeinheit 18 auch als ein Greifmittel ausgebildet sein, das in vertikaler Richtung bewegt wird. Die Höhenverstellung der Zuführeinheit 18 kann über einen eigenen Antrieb erfolgen. Auch die Schwenkung der Klappen 10 kann über andere mechanische Mittel erfolgen. Es ist auch denkbar, die Bewegung der Klappen 10 im Abgabebereich 14 der Vorrichtung ebenfalls mechanisch über eine Kurvenbahn zu steuern, wobei der Pneumatikzylinder 58 aufgrund des schlagartigen Einsatzes bevorzugt ist.

## Patentansprüche

1. Vorrichtung zum Transport flacher Gegenstände (4) von einer Abgabeeinheit (6) an eine Aufnahmeeinheit (8), mit
einem Transportband (2), an dem die flachen Gegenstände (4) hängend transportierbar sind,
wobei das Transportband (2) mehrere Paare von Klappen (10) aufweist, wobei jede Klappe (10) einen ersten Schenkel (20) und einen zweiten Schenkel (22) aufweist, welche einen Zwischenraum (24) zur Aufnahme eines Randabschnitts eines der flachen Gegenstände (4) definieren, und wobei die ersten Schenkel (20) und zweiten Schenkel (22) der Klappen (10) eines jeden Paares von Klappen (10) einander zugewandt sind, und
wobei die Klappen (10) zwischen einer Öffnungsstellung zur Aufnahme und Abgabe der flachen Gegenstände (4) und einer Schließstellung zum Transport der flachen Gegenstände (4) schwenkbar sind,
**dadurch gekennzeichnet, dass**
die Vorrichtung eine Zuführeinheit (18) aufweist, welche die flachen Gegenstände (4) von unten in die Klappen (10) fördert.

2. Vorrichtung nach Anspruch 1, **dadurch gekennzeichnet, dass** der erste Schenkel (20) und der zweite Schenkel (22) einer Klappe (10) einen spitzen Winkel einschließen.

3. Vorrichtung nach Anspruch..2, **dadurch gekennzeichnet, dass** der erste Schenkel (20) und der zweite Schenkel (22) einer Klappe (10) einen Winkel von zwischen 45° und 70°, vorzugsweise zwischen 55° und 60°, einschließen.

4. Vorrichtung nach einem der vorangehenden Ansprüche, **dadurch gekennzeichnet, dass** der zweite Schenkel (22) kürzer ist als der erste Schenkel (20).

5. Vorrichtung nach einem der vorangehenden Ansprüche, **dadurch gekennzeichnet, dass** der erste Schenkel (20) in der Schließstellung horizontal ausgerichtet ist und in der nach unten geschwenkten Öffnungsstellung einen Winkel von zwischen 20° und 45°, vorzugsweise zwischen 30° und 35°, zur Horizontalen einnimmt.

6. Vorrichtung nach einem der vorangehenden Ansprüche, **dadurch gekennzeichnet, dass** die Klappen (10) kurvengesteuert schwenkbar sind.

7. Vorrichtung nach Anspruch 6, **dadurch gekennzeichnet, dass** sie eine erste Kurvenbahn (30) aufweist, weiche zwei höhenverstellbare Abschnitte (36, 56) zur Schwenkung der Klappen (10) aufweist.

8. Vorrichtung nach Anspruch 7, **dadurch gekennzeichnet, dass** die Höhenverstellung eines ersten Abschnittes (36) der ersten Kurvenbahn (30) in einem Aufnahmebereich (12) der Vorrichtung über eine erste Kurvenscheibe (38) erfolgt, welche an einer extern angetriebenen ersten Welle (40) befestigt ist.

9. Vorrichtung nach Anspruch 7 oder 8, **dadurch gekennzeichnet, dass** die Höhenverstellung eines zweiten Abschnittes (56) der ersten Kurvenbahn (30) in einem Abgabebereich (14) der Vorrichtung über einen Pneumatikzylinder (58) erfolgt.

10. Vorrichtung nach einem der Ansprüche 6 bis 9, **dadurch gekennzeichnet, dass** jede Klappe (10) eine erste Rolle (28) aufweist, welche seitlich versetzt zu einer Drehachse (26) der Klappe (10) angeordnet ist und mit der ersten Kurvenbahn (30) der Vorrichtung zusammenwirkt.

11. Vorrichtung nach Anspruch 10, **dadurch gekennzeichnet, dass** jede Klappe (10) eine zweite Rolle (32) aufweist, welche ebenfalls seitlich versetzt zur Drehachse (26) der Klappe (10) angeordnet ist, allerdings auf einer der ersten Rolle (28) gegenüberliegenden Seite, und mit einer zweiten Kurvenbahn (34) der Vorrichtung zusammenwirkt.

12. Vorrichtung einem der vorangehenden Ansprüche, **dadurch gekennzeichnet, dass** die Zuführeinheit (18) als Ansaugvorrichtung ausgestaltet ist.

13. Vorrichtung nach einem der vorangehenden Ansprüche, **dadurch gekennzeichnet, dass** die Zuführeinheit (18) kurvengesteuert ist.

14. Vorrichtung nach Anspruch 13, **dadurch gekennzeichnet, dass** eine Höhenverstellung der Zuführeinheit (18) über eine zweite Kurvenscheibe (44) erfolgt, welche an einer extern angetriebenen zweiten Welle (46) befestigt ist.

## Claims

1. Device for transporting flat objects (4) from an output unit (6) to a receiving unit (8), comprising a conveyor belt (2) on which the flat objects (4) can be transported in a suspended manner, the conveyor belt (2) comprising a plurality of pairs of flaps (10), each flap (10) comprising a first side piece (20) and a second side piece (22) which define an intermediate space (24) for receiving an edge portion of one of the flat objects (4), the first side pieces (20) and the second side pieces (22) of the flaps (10) of each pair of flaps (10) facing each other, the flaps (10) being pivotable between an open position for picking up and releasing the flat objects (4) and a closed position for transporting the flat objects (4), **characterised in that** the device comprises a feed unit (18) which conveys the flat objects (4) into the flaps (10) from below.

2. Device according to claim 1, **characterised in that** the first side piece (20) and the second side piece (22) of a flap (10) form an acute angle.

3. Device according to claim 2, **characterised in that** the first side piece (20) and the second side piece (22) of a flap (10) form an angle of between 45° and 70°, preferably between 55° and 60°.

4. Device according to any one of the preceding claims, **characterised in that** the second side piece (22) is shorter than the first side piece (20).

5. Device according to any one of the preceding claims, **characterised in that** the first side piece (20), when in the closed position, is orientated horizontally, and when in the downward-pivoted open position forms an angle of between 20° and 45°, preferably between 30° and 35°, to the horizontal.

6. Device according to any one of the preceding claims, **characterised in that** the flaps (10) are pivotable in a cam-controlled manner.

7. Device according to claim 6, **characterised in that** it comprises a first cam plate (30), which comprises two height-adjustable portions (36, 56) for pivoting the flaps (10).

8. Device according to claim 7, **characterised in that** the height of a first portion (36) of the first cam plate (30) in a pick-up region (12) of the device is adjusted by a first cam disc (38) which is mounted on an externally driven first shaft (40).

9. Device according to either claim 7 or claim 8, **characterised in that** the height of a second portion (56) of the first cam plate (30) in a release region (14) of the device is adjusted by a pneumatic cylinder (58).

10. Device according to any one of claims 6 to 9, **characterised in that** each flap (10) comprises a first roller (28) which is laterally offset from an axis of rotation (26) of the flap (10) and cooperates with the first cam plate (30) of the device.

11. Device according to claim 10, **characterised in that** each flap (10) comprises a second roller (32) which is also laterally offset from the axis of rotation (26) of the flap (10), but on a side opposite the first roller (28), and cooperates with a second cam plate (34) of the device.

12. Device according to any one of the preceding claims, **characterised in that** the feed unit (18) is configured as a suction device.

13. Device according to any one of the preceding claims, **characterised in that** the feed unit (18) is cam-controlled.

14. Device according to claim 13, **characterised in that** a height of the feed unit (18) is adjusted by a second cam disc (44) which is mounted on an externally driven second shaft (46).

## Revendications

1. Dispositif destiné au transport d'objets plats (4) d'une unité de distribution (6) à une unité de réception (8), comprenant
une bande transporteuse (2), sur laquelle les objets plats (4) sont transportables en suspension,
dans lequel la bande transporteuse (2) comporte plusieurs paires de volets (10), chaque volet (10) présentant une première branche (20) et une seconde branche (22), qui définissent un espace intermédiaire (24) pour la réception d'une section de bordure de l'un des objets plats (4), et les premières branches (20) et secondes branches (22) des volets (10) de chaque paire de volets (10) étant tournées les unes vers les autres, et
dans lequel les volets (10) peuvent pivoter entre une position d'ouverture pour la réception et la distribution des objets plats (4) et une position de fermeture pour le transport des objets plats (4),
**caractérisé en ce que**
le dispositif présente une unité d'alimentation (18), qui transporte les objets plats (4) à partir du bas dans les volets (10).

2. Dispositif suivant la revendication 1, **caractérisé en ce que** la première branche (20) et la seconde branche (22) d'un volet (10) forment entre elles un angle aigu.

3. Dispositif suivant la revendication 2, **caractérisé en ce que** la première branche (20) et la seconde branche (22) d'un volet (10) forment entre elles un angle compris entre 45° et 70°, de préférence entre 55° et 60°.

4. Dispositif suivant l'une des revendications précédentes, **caractérisé en ce que** la seconde branche (22) est plus courte que la première branche (20).

5. Dispositif suivant l'une des revendications précédentes, **caractérisé en ce que** la première branche (20) est orientée horizontalement dans la position de fermeture et occupe dans la position d'ouverture, de pivotement vers le bas, un angle compris entre 20° et 45°, de préférence entre 30° et 35°, par rapport à l'horizontale.

6. Dispositif suivant l'une des revendications précédentes, **caractérisé en ce que** les volets (10) sont commandés par cames pour leur pivotement.

7. Dispositif suivant la revendication 6, **caractérisé en ce qu'**il présente un premier chemin de cames (30), qui comporte deux sections (36, 56) réglables en hauteur pour le pivotement des volets (10).

8. Dispositif suivant la revendication 7, **caractérisé en ce que** le réglage en hauteur d'une première section (36) du premier chemin de cames (30) s'effectue dans une zone de réception (12) du dispositif par l'intermédiaire d'une première came (38), qui est fixée sur un premier arbre (40) entraîné extérieurement.

9. Dispositif suivant l'une des revendications 7 et 8, **caractérisé en ce que** le réglage en hauteur d'une seconde section (56) du premier chemin de cames (30) s'effectue dans une zone de distribution (14) du dispositif par l'intermédiaire d'un cylindre pneumatique (58).

10. Dispositif suivant l'une des revendications 6 à 9, **caractérisé en ce que** chaque volet (10) présente un premier galet (28), qui est disposé en déport latéral par rapport à un axe de rotation (26) du volet (10) et coopère avec le premier chemin de cames (30) du dispositif.

11. Dispositif suivant la revendication 10, **caractérisé en ce que** chaque volet (10) présente un second galet (32), qui est également disposé en déport latéral par rapport à l'axe de rotation (26) du volet (10), mais sur un côté en vis-à-vis du premier galet (28), et coopère avec un second chemin de cames (34) du dispositif.

12. Dispositif suivant l'une des revendications précédentes, **caractérisé en ce que** l'unité d'alimentation (18) est configurée sous forme de dispositif d'aspiration.

13. Dispositif suivant l'une des revendications précédentes, **caractérisé en ce que** l'unité d'alimentation (18) est commandée par cames.

14. Dispositif suivant la revendication 13, **caractérisé en ce qu'**un réglage en hauteur de l'unité d'alimentation (18) s'effectue par l'intermédiaire d'une seconde came (44), qui est fixée sur un second arbre (46) entraîné extérieurement.
